# DEMANDE DE BREVET EUROPEEN

(11) **EP 0 950 510 A1**
(43) Date de publication de la demande: **20.10.1999**
(21) Numéro de dépôt: 98202184.2
(22) Date de dépôt: 29.06.1998
(51) Int. Cl.: B32B 21/08, B27N 3/06

(54) **Procédé de réalisation d'un revêtement de sol à parement en bois naturel ou synthétique et produit obtenu**

(30) Priorité: 15.04.1998 US 81797 P
(71) Demandeur: Sommer Revêtements France S.A., 92748 Nanterre Cedex (FR)
(72) Inventeur: Delcroix, Ludovic, 6600 Bastogne (BE); Roussel, Albert, 9514 Wiltz (LU)
(74) Mandataire: Van Malderen, Joelle

(57) **Abrégé**

La présente invention se rapporte à un procédé de fabrication d'un revêtement de sol se présentant sous forme de panneaux, caractérisé en ce que l'on assemble en une seule étape un envers (1) faisant fonction de contre-parement d'équilibrage, une couche intermédiaire (10) destinée à constituer l'âme du revêtement de sol et qui est essentiellement composée d'un mélange de fines particules organiques et de colle en poudre thermodurcissable et non réticulée, une feuille en matériau thermoplastique (20), un parement décoratif (3) et éventuellement une feuille (4) destinée à constituer la couche d'usure, le tout étant maintenu à une température comprise entre 120 et 200 °C pour une pression comprise entre 30 et 150 kg/cm², en vue de provoquer la réticulation de la colle.

## Description

### Object de l'invention

La présente invention se rapporte à un procédé de réalisation d'un revêtement de sol qui comporte un parent en bois naturel ou synthétique se présentant essentiellement sous la forme d'un panneau ou d'une lame.

La présente invention se rapporte également au revêtement de sol obtenu par ledit procédé, comprenant soit un parement de bois naturel, soit un parement synthétique.

### Arrière-plan technologique à la base de l'invention

Dans la publication WO96/04114, on a décrit un procédé de fabrication de revêtements de sol à parement en bois naturel ou synthétique, dans lequel on assemble en une seule étape un envers faisant fonction de contreparement d'équilibrage, une couche intermédiaire destinée à constituer l'âme du revêtement, un parement décoratif et éventuellement une feuille destinée à constituer la couche d'usure, le tout étant maintenu sous presse à une haute température et à haute pression en vue de provoquer la réticulation de la colle présente dans la couche intermédiaire.

Eventuellement, on peut prévoir de réaliser dans une étape préalable un composé pré-aggloméré qui va servir à réaliser l'âme du panneau et que l'on appelle également habituellement "gâteau", obtenu en tassant légèrement un mélange sec de particules fines organiques et de colle en poudre non réticulée que l'on soumet à un traitement thermique à basse température sous pression. Ce traitement permet d'obtenir un composé cohérent, que l'on peut aisément manipuler pour permettre la réalisation du panneau final constituant le revêtement de sol.

Ce procédé présente plusieurs avantages, parmi lesquels la réduction du nombre d'opérations de fabrication, le contrôle de la composition et des caractéristiques précises du panneau, l'homogénéité du produit obtenu ainsi que la possibilité de recycler les déchets.

Pour un type particulier d'application, qui se rapporte à l'utilisation dans les locaux humides tels qu'une salle de bain ou une cuisine, on peut envisager de modifier les caractéristiques du panneau en faisant varier le taux de colle et éventuellement sa nature, la densité du panneau ainsi que la composition de l'âme par incorporation de particules moins sensibles à l'eau que les matières végétales cellulosiques. Néanmoins, bien que l'on puisse obtenir des revêtements présentant un comportement amélioré à l'humidité, celui-ci reste encore insuffisant pour certaines applications. En particulier dans le cas d'utilisation de parements à base de papier mélaminé, on observe que les produits obtenus ne présentent pas une imperméabilité suffisante. En effet, l'humidité s'accumule en surface, ce qui créera un gradient d'humidité déséquilibrant tout le produit. Cela se traduit essentiellement par un "tuilage" et une déformation des bords des lames.

### Buts de l'invention

La présente invention vise à proposer un stratifié essentiellement réalisé selon le procédé décrit dans la demande antérieure WO96/04114 qui présente un comportement encore amélioré à l'humidité.

La présente invention vise en particulier à éviter tout phénomène de tuilage ou de déformation des bords pour un panneau réalisé selon un procédé tel que décrit dans la demande antérieure WO96/04114.

### Principaux éléments caractéristiques de l'invention

La présente invention vise à proposer de résoudre les problèmes de l'état de la technique, en particulier dans le cas d'une utilisation dans des locaux particulièrement humides. La solution consiste à ajouter une feuille de protection de type thermoplastique entre le parement décoratif et l'âme du produit afin d'éviter que l'humidité provenant de l'intérieur du produit n'atteigne la surface du panneau.

On a observé que, de manière surprenante, on pouvait intercaler une feuille thermoplastique entre les différentes strates du panneau qui sont réalisées à base de matières essentiellement thermodurcissables sans provoquer de tension particulière entre ces différentes strates et malgré les conditions sévères d'agglomération.

Un premier objet de la présente invention réside donc dans le fait de proposer un procédé de fabrication d'un revêtement de sol à parement en bois naturel ou même synthétique, dans lequel on assemble en une seule étape un envers faisant fonction de contre-parement d'équilibrage, une couche intermédiaire destinée à constituer l'âme du revêtement et qui est essentiellement composée d'un mélange de fines particules organiques et d'une colle en poudre thermodurcissable et non réticulée, d'une feuille en matériau thermoplastique, d'un parement décoratif et éventuellement d'une feuille destinée à constituer la couche d'usure, le tout étant maintenu sous presse dans des conditions de température et de pression élevées en vue de provoquer la réticulation de la colle.

Par "haute température et haute pression", on entend une température comprise entre 120 et 200 °C pour une pression comprise entre 30 et 150 kg/cm².

Eventuellement, selon une forme d'exécution encore préférée et déjà mentionnée dans la publication antérieure WO96/04114, on réalise, lors d'une étape précédente, la couche intermédiaire sous forme d'un "gâteau" qui est destiné à constituer l'âme du revêtement de sol en mélangeant les fines particules organiques et la colle thermodurcissable et en soumettant ce mélange à un traitement à relativement basse température, c'est-à-dire entre 50 et 100 °C pour une pression comprise entre 30 et 100 kg/cm².

Selon une forme d'exécution encore préférée, on propose d' incorporer une feuille thermoplastique à base de polyoléfine, et ceci pour des raisons essentiellement écologiques (absence de chlore) mais également économiques. Selon une autre forme d'exécution, on peut envisager d'utiliser une feuille à base de polyéthylène et d'ionomères.

La viscosité du mélange destiné à réaliser la feuille thermoplastique devra être adaptée de manière à éviter tout fluage, et donc le déchirement du parement décoratif constitué éventuellement par un papier lors de l'assemblage sous haute pression et haute température.

On observe en outre de manière particulièrement avantageuse que le fait de disposer une feuille thermoplastique entre l'âme du revêtement et la parement décoratif permet d'obtenir un amélioration de la résistance à l'abrasion. Ceci est en effet dû au fait que la surface ne sera plus déformée par les aspérités de la couche intermédiaire dues à la présence de particules organiques qui peuvent être relativement grossières. Ceci conduit également au résultat que l'on peut envisager d'utiliser des particules encore plus grossières pour la fabrication du revêtement de sol ou panneau, avec pour conséquence que les déchets recyclés seront également plus grossiers.

On observe également de manière avantageuse que le contre-parement d'équilibrage pourra être plus léger du fait que les tensions générées en surface sont plus faibles.

Selon la présente invention, on pourra utiliser comme parement décoratif un papier imprimé imprégné ou non de mélamine, et ceci sans crainte de l'apparition de taches de colle dans le décor.

En outre, on observe que les propriétés du produit final obtenues grâce au procédé décrit dans le document WO96/04114 sont préservées; en particulier la résistance aux chocs, à la brûlure de cigarette et aux taches est totalement maintenue.

On peut également envisager d'utiliser une feuille thermoplastique sur l'envers du produit en vue de l'équilibrage et de l'étanchéité de celui-ci.

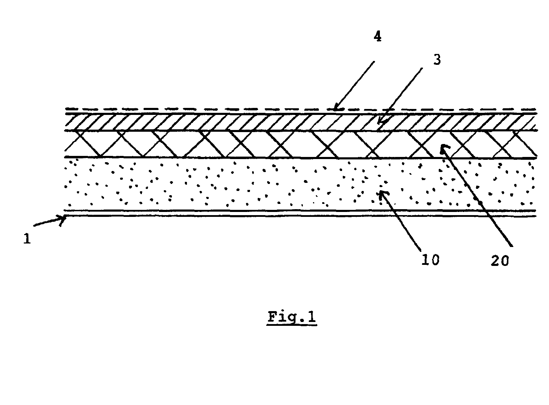

### Brève description de la figure

La présente invention sera décrite plus en détail à l'aide de l'exemple d'exécution préféré se référant à la figure unique annexée, qui représente un revêtement de sol réalisé selon le procédé de la présente invention.

### Description détaillée de plusieurs formes d'exécution préférées de l'invention

La présente invention se rapporte à un procédé de fabrication d'un revêtement de sol qui au sein d'un même produit permet de combiner les matières thermoplastiques et les matières thermodurcissables.

On sait depuis longtemps que les comportements de ces deux types de matériaux sont très différents, et parfois même inconciliables. Les matériaux thermoplastiques présentent un allongement lorsque la température augmente, et ont tendance à se rétrécir lorsque celle-ci diminue. Les matériaux thermodurcissables présentent un durcissement plus élevé de la matière lorsque la température augmente, et de ce fait, se rétractent lors de la réticulation.

Cependant, on a observé que de manière particulièrement surprenante, on pouvait parvenir à réaliser des produits présentant une stabilité dimensionnelle suffisante en combinant des produits thermodurcissables à des produits thermoplastiques lors d'une seule et même étape de fabrication.

Un premier objet de l'invention consiste à proposer un procédé qui, dans une même étape, permet d'assembler un envers 1 faisant fonction de contre-parement d'équilibrage, une couche intermédiaire 10 destinée à constituer l'âme du revêtement et qui est essentiellement composée d'un mélange de fines particules organiques et de colle thermodurcissable, essentiellement non réticulée, une feuille en matériau thermoplastique 20, un parement décoratif 3 et éventuellement une feuille 4 destinée à constituer la couche d'usure.

On réalise la feuille thermoplastique 20 par des techniques classiques en soi, telles que le calandrage ou l'extrusion. Une composition classique de polyoléfine est reprise ci-dessous à titre d'exemple.

| | |
|---|---|
| PE | 60 |
| Ionomère copolymère | 30 |
| Ionomère terpolymère | 10 |
| Craie | 150 |
| Huile | 3 |
| Antioxydant | 0.5 |
| Stéarine | 0.5 |
| Pigment | Selon la couleur |

Ces matières sont mélangées et fondues à l'aide de plusieurs mélangeurs successifs à une température proche de 180 °C. Le mélange est ensuite légèrement refroidi à la sortie jusqu'à une température d'environ 175 °C pour alimenter une calandre à quatre cylindres.

Le mélange est calandré à une température comprise entre 160 et 180 °C, de façon à obtenir une feuille qui est extraite du quatrième cylindre à une température proche de 100 °C en présentant une épaisseur de l'ordre de 300 µm.

La feuille est ensuite refroidie et découpée au format du panneau qui doit permettre de réaliser le revêtement de sol.

Ensuite, on effectue la préparation de l'âme 10 du revêtement à base d'un mélange de sciure de bois, de déchets broyés et d'une colle thermodurcissable en poudre. Cette colle est de préférence une résine phénolique. Eventuellement, divers autres additifs peuvent y être également incorporés.

Ce mélange est saupoudré de manière homogène sur un tapis transporteur et est préchauffé à une température comprise entre 80 et 100 °C, dégazé à 80 °C et puis soumis à une pression de 60 à 80 kg/cm² à une température de 80 °C pendant une durée de 30 secondes.

Le panneau obtenu, qui est appelé également "gâteau", est ensuite découpé au format désiré du panneau et est stocké sur palette. Les bords sont recyclés directement.

Le procédé de fabrication du revêtement consiste à déposer successivement sur une tôle de transport un contre-parement d' équilibrage (envers), le gâteau pré-aggloméré décrit précédemment présentant une densité de 6,6 kg/m², une feuille de polyoléfine telle que décrite ci-dessus, un papier imprimé décoratif et une couche d'usure se présentant sous forme d'overlay mélamine. Eventuellement, l'ensemble est recouvert par une tôle de grainage pour lui donner si nécessaire un aspect de surface. L'ensemble est soumis à une pression de 60 à 120 kg/m² à une température de 160 °C pendant 4 minutes.

Le produit aggloméré est ensuite transporté sous presse froide, où il est refroidi jusqu'à une température de 33 °C sous faible pression pendant 4 minutes.

Le panneau est ensuite émargé et découpé en lames, et stabilisé pendant quelques jours avant usinage des chants en rainure et languette pour l'assemblage. Eventuellement, on peut intercaler une feuille de polyoléfine d'étanchéité entre l'envers et le gâteau pré-aggloméré.

Selon une seconde forme d'exécution préférée, on peut envisager de réaliser un panneau à revêtement bois naturel, pour lequel on prépare une feuille thermoplastique essentiellement comme décrit ci-dessus, mais avec la composition suivante :

| | |
|---|---|
| PE | 50 |
| Ionomère copolymère | 50 |
| Craie | 100 |
| Huile | 2 |
| Antioxydant | 0.5 |
| Stéarine | 0.5 |
| Pigment | Selon la couleur |

On réalise également un gâteau destiné à réaliser l'âme du revêtement comme décrit précédemment. Ensuite, pour effectuer le revêtement de sol, on dépose successivement sur une tôle de transport un contre-parement d'équilibrage qui peut éventuellement être constitué par une feuille de placage bois, le gâteau pré-aggloméré décrit précédemment présentant une densité de 6,6 kg/m², une feuille calandrée de polyoléfine telle que décrite ci-dessus, une feuille de placage en bois d'une épaisseur de 0,6 mm et enfin une couche d'usure se présentant sous forme d'overlay mélamine. L'ensemble est soumis aux mêmes conditions que repris ci-dessus.

## Revendications

1. Procédé de fabrication d'un revêtement de sol se présentant sous forme de panneaux, dans lequel on assemble en une seule étape un envers (1) faisant fonction de contre-parement d'équilibrage, une couche intermédiaire (10) destinée à constituer l'âme du revêtement de sol et qui est essentiellement composée d'un mélange de fines particules organiques et de colle en poudre thermodurcissable et non réticulée, un parement décoratif (3) et éventuellement une feuille (4) destinée à constituer la couche d'usure, le tout étant maintenu à une température comprise entre 120 et 200 °C pour une pression comprise entre 60 et 120 kg/cm², en vue de provoquer la réticulation de la colle, caractérisé en ce que l'on incorpore lors de cette étape, entre l'âme (10) du revêtement de sol et le parement décoratif (3), une feuille en matériau thermoplastique (20).

2. Procédé de fabrication d'un revêtement de sol selon la revendication 1, caractérisé en ce que la feuille en matériau thermoplastique (20) sert de barrière d'étanchéité.

3. Procédé de fabrication d'un revêtement de sol selon la revendication 1 ou 2, caractérisé en ce que la feuille thermoplastique (20) est à base de polyoléfines, en particulier à base de polyéthylène et/ou ionomères.

4. Procédé de fabrication d'un revêtement de sol selon la revendication 3, caractérisé en ce que la feuille thermoplastique (20) comprend également des additifs tels qu'une charge, des huiles, des antioxydants, de la stéarine et/ou des pigments.

5. Procédé de fabrication d'un revêtement de sol selon l'une quelconque des revendications précédentes, caractérisé en ce que la viscosité du mélange destiné à réaliser la feuille thermoplastique (20) est adaptée de manière à éviter tout fluage.

6. Procédé de fabrication d'un revêtement de sol selon l'une quelconque des revendications précédentes, caractérisé en ce que la composition de la feuille thermoplastique (20) est choisie en fonction de son adaptabilité à l'étape d'assemblage à la température entre 120 et 200 °C pour une pression comprise entre 60 et 120 kg/m².

7. Procédé de fabrication d'un revêtement de sol selon l'une quelconque des revendications précédentes, caractérisé en ce que la feuille thermoplastique (20) est disposée (sans adjonction de colle) entre l'âme (10) du revêtement de sol et le parement décoratif (3).

8. Procédé de fabrication d'un revêtement de sol selon l'une quelconque des revendications précédentes, caractérisé en ce que l'on ajoute entre l'envers (1) et l'âme (10) du revêtement de sol également une seconde feuille en matériau thermoplastique.

9. Procédé de fabrication d'un revêtement de sol selon l'une quelconque des revendications précédentes, caractérisé en ce que la couche intermédiaire (10) destinée à constituer l'âme est constituée par un mélange sec de fines particules organiques et de colle en poudre non réticulée, ce mélange étant légèrement tassé au moyen d'un rouleau afin que l'on puisse y déposer successivement le parement décoratif (3) et éventuellement la feuille (4) destinée à former la couche d'usure.

10. Procédé de fabrication d'un revêtement de sol selon l'une quelconque des revendications 1 à 8, caractérisé en ce que la couche intermédiaire (10) est constituée par un gâteau obtenu préalablement à l'étape d'assemblage en moulant le mélange de fines particules organiques et de colle en poudre essentiellement non réticulée à basse température et sous pression.

11. Procédé de fabrication d'un revêtement de sol selon la revendication 10, caractérisé en ce que l'on travaille pour l'étape de fabrication de préparation du gâteau à une température comprise entre 50 et 100 °C et une pression comprise entre 30 et 100 kg/m².

12. Procédé de fabrication d'un revêtement de sol selon l'une quelconque des revendications précédentes, caractérisé en ce que les fines particules organiques sont constituées par de la farine de bois et/ou des fibres telles que des fibres de cellulose et auxquelles on ajoute éventuellement d'autres particules synthétiques plus dures.

13. Procédé de fabrication d'un revêtement de sol selon l'une quelconque des revendications précédentes, caractérisé en ce que la colle en poudre utilisée est une colle du type phénoplaste ou aminoplaste ou encore polyuréthane.

14. Revêtement de sol à parement synthétique ou bois obtenu par le procédé selon l'une quelconque des revendications précédentes, caractérisé en ce qu'il comprend successivement un contre-parement (1) destiné à constituer l'envers, une âme (10) essentiellement composée d'un mélange de particules organiques et d'une colle thermodurcissable réticulée exempte de solvant, une feuille en matériau thermoplastique (20), un parement décoratif (3) de type papier mélaminé imprimé ou même bois, et éventuellement une couche d'usure (4) superficielle.
